**Europäisches Patentamt**

**European Patent Office**

**Office européen des brevets**

(11) Veröffentlichungsnummer: **0 487 962 A1**

# EUROPÄISCHE PATENTANMELDUNG

(21) Anmeldenummer: **91119149.2**

(22) Anmeldetag: **11.11.91**

(51) Int. Cl.5: **C04B 28/24**, //(C04B28/24, 14:46,24:12,40:02)

(30) Priorität: **29.11.90 DE 4038060**

(43) Veröffentlichungstag der Anmeldung:
**03.06.92 Patentblatt 92/23**

(84) Benannte Vertragsstaaten:
**AT CH DE ES FR GB IT LI NL**

(71) Anmelder: **DIDIER-WERKE AG**
**Lessingstrasse 16-18**
**W-6200 Wiesbaden(DE)**

(72) Erfinder: **Worms, Alfred**
**Kurt-Schuhmacherstrasse 17**
**W-6555 Sprendlingen(DE)**
Erfinder: **Nebe, Ulrich, Dr.**
**Friedberger Strasse 3**
**W-6303 Hungen(DE)**

(74) Vertreter: **Brückner, Raimund, Dipl.-Ing.**
**c/o Didier-Werke AG Lessingstrasse 16-18**
**W-6200 Wiesbaden(DE)**

(54) **Verfahren zur Herstellung von keramischen Faserwerkstoffen mit anorganischem Bindersystem.**

(57) Die Erfindung betrifft ein Verfahren zur Herstellung von Formteilen mit keramischen Fasern durch Herstellung einer wässrigen Aufschlämmung von feuerfesten und/oder feuerbeständigen Fasern, gegebenenfalls feuerfesten und/oder feuerbeständigen feinteiligen Materialien und weiteren üblichen Bestandteilen, wobei als Bindemittelsystem eine Kombination von zwei entgegengesetzt geladenen Kolloiden unter Ausfällung von festen Bestandteilen der Aufschlämmung verwendet wird, und Herstellung und Trocknung von Formteilen aus dieser Aufschlämmung, sowie nach dem Verfahren hergestellte Formteile.

Das erfindungsgemäße Verfahren ist dadurch gekennzeichnet, daß als Bindemittelsystem eine Kombination aus kationischem und anionischem Kieselsol verwendet wird.

EP 0 487 962 A1

Die Erfindung betrifft ein Verfahren zur Herstellung von Formteilen mit keramischen Fasern durch Herstellung einer wässrigen Aufschlämmung von feuerfesten und/oder feuerbeständigen Fasern, gegebenenfalls feuerfesten und/oder feuerbeständigen feinteiligen Materialien und weiteren üblichen Bestandteilen, wobei als Bindemittelsystem eine Kombination von zwei entgegengesetzt geladenen Kolloiden unter Ausfällung von festen Bestandteilen der Aufschlämmung verwendet wird, und Herstellung und Trocknung von Formteilen aus dieser Aufschlämmung sowie nach dem Verfahren hergestellte Formteile.

Aus der DE 34 36 781 C2 ist bereits ein Verfahren zur Herstellung von Formleichtkörpern aus keramische Fasern, feinzerteilte Feuerfeststoffe und übliche Zusätze enthaltenden wässrigen Dispersionen bekannt, wobei zunächst zwei getrennte Dispersionen hergestellt werden, nämlich einmal eine Dispersion, in welcher die keramischen Fasern mit einem kationischen Flockungsmittel ausgeflockt werden, und eine zweite Dispersion eines Schlikkers der feinzerteilten Feuerfeststoffe und des anorganischen Bindemittels, die mit einen anionischen Flockungsmittel ausgeflockt wird. Alternativ kann nach Ausflockung von keramischen Fasern mit einem kationischen Flockungsmittel die Zugabe der feinzerteilten Feuerfeststoffe und dann die Zugabe des anionischen Flockungsmittels erfolgen.

Als kationische bzw. anionische Flockungsmittel gemäß dieser DE 34 36 781 C2 werden Polyelektrolyte verwendet, als anorganische Bindemittel übliche Bindemittel wie Tone und Phosphatbindemittel.

Weiterhin ist aus der US-PS 3,785,838 ein Verfahren zur Herstellung von Matten mit anorganischen Fasern wie Mineralwolle bekannt, bei welchem sowohl positiv geladene Kolloidteilchen von Siliziumdioxid, welchem aus einem Kern von Siliziumdioxid mit einer Beschichtung von wenigstens einem Oxid, Hydroxid oder hydratisiertem Oxid von Aluminium, Chrom, Titan und Zirkonium bestehen müssen, und ein negativ geladenes Flockungsmittel in Form von Montmorillonit, Saponit, Hectorit oder Attapulgit zusammen mit kolloidalem, amorphem feinzerteiltem Aluminiumoxid und kolloidalem Boehmit verwendet werden müssen.

Die Verwendung von organischen Bindemitteln und Flockungsmitteln ist insofern nachteilig, daß diese organischen Bestandteile in dem fertigen Formteil zumindest teilweise verbleiben, was bei der Anwendung Nachteile mit sich bringt, da diese organischen Bestandteile bei höheren Temperaturen unter Bildung von gasförmigen Produkten zersetzt werden, und sich dadurch die physikalischen Eigenschaften, besonders die Festigkeit, verändern.

Aufgabe der vorliegenden Erfindung ist es, solche Ausbrandstoffe in erfindungsgemäß hergestellten Formteilen zu vermeiden und dennoch eine bleibende Festigkeit der Formteile von Raumtemperatur bis zur Anwendungstemperatur zu erreichen, wobei das Verfahren einfach durchgeführt werden soll und gleichzeitig vermieden werden soll, daß in den fertigen Formteilen anorganische Fremdstoffe vorliegen, welche die Anwendungsgrenztemperaturen der Formteile negativ beeinträchtigen könnten, und zwar durch Bildung nicht erwünschter Zusammensetzungen mit niedrigen Eutektika.

Es wurde nun überraschenderweise gefunden, daß es möglich ist, unter Verwendung von speziellen anorganischen Bindemitteln ein einfaches und wirksames Verfahren zur Herstellung von keramische Fasern enthaltenden Formteilen durchzuführen, sofern ein geeignetes Bindemittelsystem angewandt wird.

Zur Lösung der zuvorgenannten Aufgabe wird erfindungsgemäß bei einem Verfahren der zuvorgenannten Gattung als Bindemittelsystem eine Kombination aus kationischem und anionischem Kieselsol verwendet.

Vorteilhafterweise wird das Bindemittelsystem in einer Menge von 5 bis 35 Gew.-%, bezogen auf die in der Aufschlämmung vorhandenen keramischen Fasern, eingesetzt, berechnet als in den Kieselsolen vorhandenes $SiO_2$.

Gemäß einer weiteren bevorzugten Ausführungsform wird bei dem erfindungsgemäßen Verfahren zuerst das kationische Kieselsol zu der wässrigen Aufschlämmung der übrigen Bestandteile, ausgenommen selbstverständlich das anionische Kieselsol, zugesetzt und hiermit vermischt, und dann erst das anionische Kieselsol zu dieser gut durchgemischten Aufschlämmung zugesetzt.

Gemäß einer weiteren bevorzugten Ausführungsform erfolgt eine Nachbehandlung der Formteile, um diesen eine bessere mechanische Stabilität zu erteilen, wozu die Formteile nach ihrer Herstellung und Trocknung mit einem das Bindemittelsystem des Werkstoffes härtenden Reagenz behandelt werden.

Vorteilhafterweise wird dieses mit einer, den pH-Wert verändernden Substanz versetzt, insbesondere eine $NH_3$-abspaltende Substanz, besonders bevorzugt Harnstoff.

Bei dem Verfahren gemäß der Erfindung einschließlich einer solchen Nachbehandlung hat es sich als vorteilhaft herausgestellt, das Formteil nach dem Inkontaktbringen mit dem härtenden Reagenz erneut zu erwärmen oder zu erhitzen.

Bei dem erfindungsgemäßen Verfahren können als keramische Fasern sämtliche auf dem Feuerfestgebiet eingesetzten keramischen Fasern verwendet werden, wobei diese üblicherweise einen $Al_2O_3$-Gehalt von $\geq$ 45 Gew.-% besitzen. Solche Fasern werden auch als Aluminiumsilikatfasern bezeichnet. Als keramische Fasern können jedoch auch sogenannte Quarzfasern verwendet werden, d.h. aus $SiO_2$ bestehende Fasern, weiterhin auch sogenannte Aluminiumoxidfasern, d.h. Fasern mit einem Gehalt von $\geq$ 70 Gew.-% $Al_2O_2$. Solche an sich bekannte feuerbeständige oder feuerfeste Fasern werden üblicherweise durch ihre Anwendungsgrenztemperatur bezeichnet, wobei übliche Anwendungsgrenztemperaturen 1260°C oder bei Fasern mit höherem $Al_2O_3$-Gehalt 1600°C sind.

Die bei dem erfindungsgemäßen Verfahren verwendeten, feinteiligen bzw. feinkörnigen feuerbeständigen und/oder feuerfesten Materialien sind ebenfalls an sich bekannte Materialien, z.B. $SiO_2$, $Al_2O_3$, Schamotte, Kaoline, Zirkoniumdioxid, Zirkoniumsilikat, Titandioxid und/oder Chromoxid ($Cr_2O_3$). Diese feuerbeständigen oder feuerfesten Materialien können jeweils alleine oder auch in Mischungen verwendet werden. Die Materialien werden entweder in feinkörniger Form, d.h. mit Korngrößen bis zu 0,9 mm, oder in feinteiliger Form, d.h. mit Korngrößen unterhalb von 0,09 mm und vorteilhafterweise unterhalb von 0,044 mm eingesetzt.

Weitere übliche Bestandteilem welche bei dem erfindungsgemäßen Verfahren verwendet werden können, sind geringe Mengen an Tensiden bzw. grenzflächenaktiven Stoffen oder zusätzliche Mengen an Phosphatbindemitteln.

Das erfindungsgemäße Verfahren wird in an sich bekannter Weise durchgeführt, d.h. es wird eine wässrige Dispersion zunächst der Fasern hergestellt, in welche die feinteiligen Materialien eingeben und ebenfalls dispergiert werden, anschließend wird das Bindemittelsystem, entweder gleichzeitig, vorteilhafterweise jedoch über getrennte Zuführungsleitungen, zu der Dispersion zugesetzt, oder es wird zunächst das kationische Kieselsol in die Dispersion eingegeben und gut hiermit vermischt und dann das anionische Kieselsol als zweiter Bestandteil des Bindemittelsystems erst zugesetzt.

Nach dem gründlichen Durchmischen wird aus der Dispersion bzw. Aufschlämmung in an sich bekannter Weise ein Formteil hergestellt, vorteilhafterweise mit Vakuum-Sieb-Formen, und der Formkörper wird bei einer Temperatur, vorteilhafterweise oberhalb von 100°C, getrocknet.

Nach dem Trocknen kann vorteilhafterweise noch eine Nachbehandlung zur Härtung des fertigen Formteiles erfolgen, insbesondere bei Verwendung eines auf pH-Veränderung ansprechenden Kieselsols, z.B. durch Tränken einer Lösung mit einem entsprechenden Reagenz, vorteilhafterweise einem bei erhöhter Temperatur $NH_3$-abspaltenden Reagenz wie Harnstoff, wozu das mit einer solchen Harnstofflösung getränkte Formteil erneut bei Temperaturen oberhalb von 100°C getrocknet wird.

Die Erfindung wird anhand der folgenden Beispiele näher erläutert.

## Beispiel 1

In einem Behälter wurden in 2000 l Wasser 15 kg Aluminiumsilikatfasern dispergiert. Anschließend wurden 1,5 kg Aluminiumoxidpulver mit einer Korngröße unterhalb von 0,09 mm eingegeben und gut vermischt. Das Mischen erfolgte mit einem mechanischen Rührer. Dann wurden 2,5 kg kationisches Kieselsol eingemischt. Der mechanische Rührer wurde dann ausgeschaltet und die Aufschlämmung durch Einblasen von Luft in Dispersion gehalten. Dann wurden 3,75 kg anionisches Kieselsol zugeben und homogen mit der Aufschlämmung vermischt.

In eine Vakuum-Siebform wurde die Aufschlämmung unter Bildung von Platten entwässert und der Formkörper bei einer Temperatur von 120°C getrocknet.

## Beispiel 2

Die Arbeitsweise von Beispiel 1 wurde wiederholt, wozu in 2000 l Wasser zunächst 7,5 kg Fasern mit hohem $Al_2O_3$-Gehalt und einer Klassifikationstemperatur von 1600°C und 7,5 kg gechopperter Fasern mit einer niedrigeren Klassifikationstemperatur aufgeschlämmt wurden, anschließend 1,5 kg Aluminiumoxidpulver zugesetzt wurde und dann als Bindemittelsystem 2,85 kg kationisches Kieselsol und 4,14 kg anionisches Kieselsol gleichzeitig, jedoch an getrennten Stellen unter Rühren der Aufschlämmung durch Einleitung von Luft zugesetzt wurden.

Auch in diesem Beispiel wurden Faserplatten erhalten, bei denen die Fasern gut aneinander hafteten.

Die bei dem erfindungsgemäßen Verfahren eingesetzten Kieselsole sind handelsübliche, an sich bekannte Produkte, welche je nach Herstellungsweise kationisch oder anionisch sind, d.h. entsprechende Überschußladungen am $SiO_2$ tragen. Diese Überschußladungen sind durch Ionen entgegengesetzter Ladung abgesättigt. Ein handelsübliches ionisches Kieselsol ist z.B. Bayer-Kieselsol, das in Konzentrationen von 15 bis 45 Gew.-% vorliegt, und sowohl kationisch als auch anionisch sein kann. Ein weiteres handelsübliches Produkt ist unter der Warenbezeichnung "Ludox" (R) erhältlich, wobei es sich um ein anionisches Kieselsol mit Alkaliionen als Absättigungsionen in Form von Kieselsollösungen mit $SiO_2$-Gehalten von 30 bis 50 Gew.-% handelt.

## Beispiel 3

Ein gemäß der Arbeitsweise von Beispielen 1 oder 2 hergestellter Formkörper wurde mit einer Sollösung, die etwa 3 Gew.-% Harnstoff enthält, gehärtet, und der Formkörper erneut bei 120°C getrocknet.

**Patentansprüche**

1. Verfahren zur Herstellung von Formteilen mit keramischen Fasern durch Herstellung einer wässrigen Aufschlämmung von feuerfesten und/oder feuerbeständigen Fasern, gegebenenfalls feuerfesten und/oder feuerbeständigen feinteiligen Materialien und weiteren üblichen Bestandteilen, wobei als Bindemittelsystem eine Kombination von zwei entgegengesetzt geladenen Kolloiden unter Ausfällung von festen Bestandteilen der Aufschlämmung verwendet wird, und Herstellung und Trocknung von Formteilen aus dieser Aufschlämmung,
dadurch gekennzeichnet,
daß als Bindemittelsystem eine Kombination aus kationischem und anionischem Kieselsol verwendet wird.

2. Verfahren nach Anspruch 1,
dadurch gekennzeichnet,
daß das Bindemittelsystem in einer Menge von 5 bis 35 Gew.-%, bezogen auf die in der Aufschlämmung vorhandenen keramischen Fasern, eingesetzt wird.

3. Verfahren nach einem der vorhergehenden Ansprüche,
dadurch gekennzeichnet,
daß zuerst das kationische Kieselsol zu der wässrigen Aufschlämmung der Bestandteile zugesetzt und hierin eingemischt und danach das anionische Kieselsol zugesetzt und eingemischt wird.

4. Verfahren nach einem der vorhergehenden Ansprüche,
dadurch gekennzeichnet,
daß nach der Herstellung und Trocknung der Formteile eine Nachbehandlung mit einem das Bindemittelsystem des Werkstoffes härtenden Reagenz durchgeführt wird.

5. Verfahren nach Anspruch 4,
dadurch gekennzeichnet,
daß dem Reagenz eine den pH-Wert verändernde Substanz zugesetzt wird.

6. Verfahren nach Anspruch 5,
dadurch gekennzeichnet,
daß dem Reagenz eine bei der Trocknung $NH_3$-abspaltende Substanz, insbesondere

Harnstoff, zugegeben wird.

7. Verfahren nach Anspruch 4, 5 oder 6,
dadurch gekennzeichnet,
daß bei der Trocknung ein erneutes Erwärmen oder Erhitzen des Formteiles nach Inkontaktbringen mit dem härtenden Reagenz durchgeführt wird.

8. Formteile mit keramischen Fasern, hergestellt nach dem Verfahren eines der vorhergehenden Ansprüche.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 138 744 (E.I.DU PONT DE NEMOURS AND CO.) <br> * Seite 2, Zeile 12 - Seite 3, Zeile 9 * <br> * Seite 8, Zeile 29 - Seite 9, Zeile 5 * <br> * Seite 10, Zeile 13 - Zeile 34; Ansprüche 1,2,7 * <br> --- | 1-3,8 | C04B28/24 <br> //(C04B28/24, <br> 14:46,24:12, <br> 40:02) |
| A | FR-A-2 183 133 (E.I.DU PONT DE NEMOURS AND CO.) <br> * Seite 2, Zeile 20 - Seite 6, Zeile 31 * <br> --- | 1-3,8 | |
| A | US-A-3 752 689 (E.P.MOORE ET AL.) <br> * Spalte 4, Zeile 22 - Spalte 6, Zeile 2 * <br> --- | 1,2,4-6 | |
| A | US-A-3 878 034 (J.N.BEVER ET AL.) <br> * Spalte 5, Zeile 1 - Spalte 6, Zeile 66; Ansprüche * <br> --- | 11,2,8 | |
| A | EP-A-0 004 385 (THE CARBORUNDUM CO.) <br> * Seite 4, Absatz 4 - Seite 6, Absatz 1 * <br> * Seite 7, letzter Absatz - Seite 9, letzter Absatz * <br> --- | 1,2,8 | |
| D,A | FR-A-2 158 517 (E.I.DU PONT DE NEMOURS AND CO.) <br> * Seite 1, Zeile 37 - Seite 4, Zeile 20 * <br> ----- | 1-3,8 | **RECHERCHIERTE SACHGEBIETE (Int. Cl.5 )** <br><br> C04B |

Der vorliegende Recherchenbericht wurde für alle Patentansprüche erstellt

| Recherchenort | Abschlußdatum der Recherche | Prüfer |
|---|---|---|
| DEN HAAG | 02 MAERZ 1992 | THEODORIDOU E. |